# EUROPEAN PATENT APPLICATION

(11) **EP 4 693 802 A1**
(43) Date of publication of application: **11.02.2026**
(21) Application number: 24784736.1
(22) Date of filing: 21.03.2024
(51) Int. Cl.: H02J 7/00, B60L 50/60, B60L 53/10, B60L 53/20, B60L 58/18, H02J 1/00, H02J 7/02

(54) **POWER SUPPLY SYSTEM**

(30) Priority: 05.04.2023 JP 2023061736
(71) Applicant: DENSO CORPORATION, Kariya-city, Aichi 448-8661 (JP)
(72) Inventor: SASAMA, Yuta, Kariya- city, Aichi 4488661 (JP); TOYAMA, Keisuke, Kariya- city, Aichi 4488661 (JP); KAZAOKA, Ryoya, Kariya- city, Aichi 4488661 (JP)
(74) Representative: TBK
(86) International application number: PCT/JP2024/010972
(87) International publication number: WO 2024/209945

(57) **Abstract**

A power supply system (100) includes a first switch (SW1) that switches the energization and de-energization of a first electrical path (24) connecting between a negative terminal of a first power storage unit (31) and a positive terminal of a second power storage unit (32), a second switch (SW2) that switches the energization and de-energization of a second electrical path (25) connecting between a negative terminal of the first power storage unit and a negative-side busbar (L1), and a third switch (SW3) that switches the energization and de-energization of a third electrical path (26) connecting between the positive terminal of the second power storage unit and the neutral point of an armature winding (11). The second electrical path is connected to the negative-busbar at one end of the negative-side main switch opposite to an end to which the second power storage unit is connected.

## Description

### [Cross-Reference to Related Applications]

The present application is based on and claims the benefit of priority from earlier Japanese Patent Application No. 2023-061736 on April 5, 2023, contents of which are incorporated herein by reference.

### [Technical Field]

The present disclosure relates to a power supply system.

### [Background Art]

Conventionally, there has been known a power supply system configured to be able to switch the connection state of a plurality of storage batteries between a series connection and a parallel connection depending on the specifications of an external charger (e.g., Patent Literature 1).

### [Citation List]

### [Patent Literature]

[PTL 1] JP 2019-47677 A

### [Summary of the Invention]

It should be noted that when switching the connection state of a storage battery to parallel state, a high current may flow, and in this case, components such as relays may malfunction.

The primary purpose of the present disclosure is to provide a power supply system capable of suppressing high currents from being generated.

A first means for solving the above problem is: a power supply system connected to a plurality of power storage units, an inverter for converting direct current from the plurality of power storage units, and a motor driven by power converted by the inverter, the power supply system including:
the plurality of power storage units includes a first power storage unit and a second power storage unit connected in series with the first power storage unit,
a positive-side main switch that switches the energization and de-energization of a positive-side busbar connecting between a positive terminal of the first power storage unit and the inverter,
a negative-side main switch hat switches the energization and de-energization of a negative-side busbar connecting between a negative terminal of the second power storage unit and the inverter,
a first switch that switches the energization and de-energization of a first electrical path connecting between a negative terminal of the first power storage unit and a positive terminal of the second power storage unit,
a second switch that switches the energization and de-energization of a second electrical path connecting between the negative terminal of the first power storage unit and a negative-side busbar, and
a third switch that switches the energization and de-energization of a third electrical path connecting between a neutral point of a multi-phase armature winding of the motor and the positive terminal of the second power storage unit, wherein
the second electrical path is connected to the negative-busbar at one end of the negative-side main switch opposite to an end to which the second power storage unit is connected.

A second means for solving the above problem is: a power supply system connected to a plurality of power storage units, an inverter for converting direct current from the plurality of power storage units, and a motor driven by power converted by the inverter, the power supply system including:
the plurality of power storage units includes a first power storage unit and a second power storage unit connected in series with the first power storage unit,
a positive-side main switch that switches the energization and de-energization of a positive-side busbar connecting between a positive terminal of the first power storage unit and the inverter,
a negative-side main switch that switches the energization and de-energization of a negative-side busbar connecting between a negative terminal of the second power storage unit and the inverter,
a first switch that switches the energization and de-energization of a first electrical path connecting between a negative terminal of the first power storage unit and a positive terminal of the second power storage unit,
a second switch that switches the energization and de-energization of a second electrical path connecting between a positive terminal of the second power storage unit and the positive-side busbar,
a third switch that switches the energization and de-energization of a third electrical path connecting between a neutral point of a multi-phase armature winding of the motor and the negative terminal of the first power storage unit, wherein
the second electrical path is connected to the positive-busbar at one end of the positive-side main switch opposite to an end to which the first power storage unit is connected.

By employing the above means, when connecting the first power storage unit and the second power storage unit in parallel, it is possible to prevent the current flowing through the first power storage unit and the current flowing through the second power storage unit from merging at the main switch. This suppresses large currents from flowing through the main switch.

### [Brief Description of the Drawings]

The above features of the present disclosure will be made clearer by the following detailed description, given referring to the appended drawings. In the accompanying drawings:
Fig. 1 shows a configuration diagram of a power supply system according to a first embodiment;
Fig. 2 shows a flowchart of a procedure of a charging process;
Fig. 3 shows a diagram of an on/off state of a switch during high-voltage charging;
Fig. 4 shows a diagram of an on/off state of the switch during low-voltage charging;
Fig. 5 shows a configuration diagram of a power supply system of a comparative example;
Fig. 6 shows a configuration diagram of a power supply system according to a second embodiment;
Fig. 7 shows a configuration diagram of a modified power supply system;
Fig. 8 shows a configuration diagram of another modified power supply system;
Fig. 9 shows a configuration diagram of a power supply system according to a third embodiment;
Fig. 10 shows a configuration diagram of a modified power supply system;
Fig. 11 shows a configuration diagram of another modified power supply system;
Fig. 12 shows a configuration diagram of another modified power supply system;
Fig. 13 shows a configuration diagram of another modified power supply system; Fig. 14 shows a configuration diagram of another modified power supply system; and
Fig. 15 shows a configuration diagram of another modified power supply system.

### [Description of the Embodiments]

A plurality of embodiments will be described with reference to the drawings. In the plurality of embodiments, functionally and/or structurally corresponding and/or related parts may be given the same reference numerals or reference numerals that differ in the hundreds or greater digits place. For corresponding and/or associated parts, reference may be made to the descriptions of other embodiments.

### <First Embodiment>

A first embodiment of a power supply system according to the present disclosure will now be described with reference to the drawings. A power supply system 100 in the present embodiment is installed in electric vehicles such as electric cars and hybrid cars, electric aircrafts, electric ships, etc., and constitutes an electric mobility system.

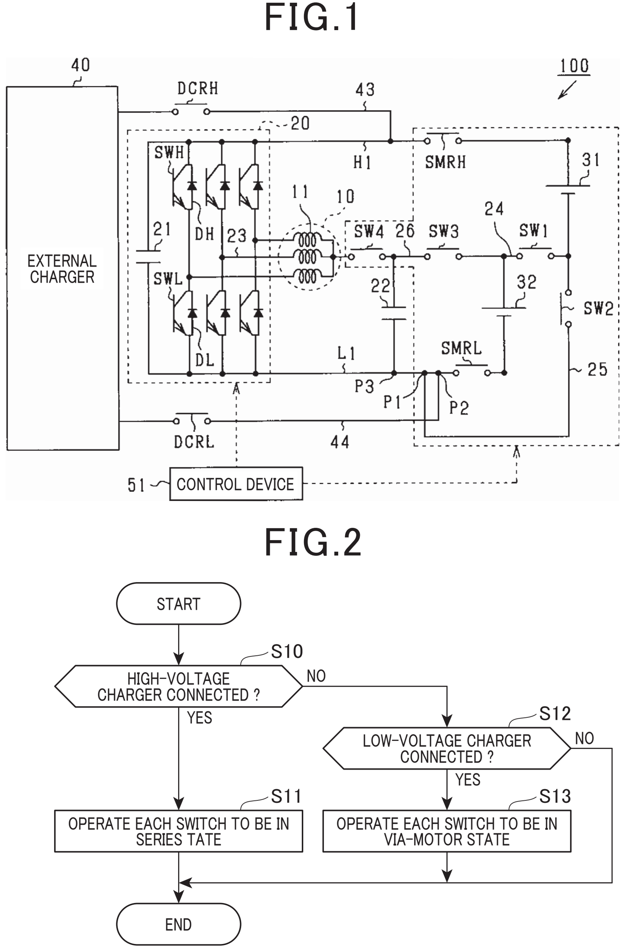

As shown in Fig. 1, the power supply system 100 is connected to a motor 10 and an inverter 20. The motor 10 is a three-phase synchronous machine, including star-connected U, V, and W phase armature windings 11 and a rotor (not shown). The armature windings 11 of each phase are arranged with a 120° electrical angle offset. The motor 10 is, for example, a permanent magnet synchronous motor. The rotor is connected to vehicle's drive wheels and is capable of transmitting power. Therefore, the motor 10 serves as a source of torque for driving the vehicle.

Inverter 20 is equipped with three sets of series-connected assemblies including upper arm switches SWH and lower arm switches SWL. Each upper arm switch SWH has an upper arm diode DH, which is a freewheeling diode, connected in reverse parallel, and each lower arm switch SWL has a lower arm diode DL, which is a freewheeling diode, connected in reverse parallel. In the present embodiment, each switch SWH and SWL is an IGBT.

The inverter 20 is equipped with a smoothing capacitor 21. A high-potential side terminal of the smoothing capacitor 21 is connected to a positive-side busbar H1. A low-potential side terminal of the smoothing capacitor 21 is connected to a negative-side busbar L1. Note that the smoothing capacitor 21 may be disposed outside the inverter 20.

In each phase, a first end of the armature windings 11 is connected to a junction point between an emitter, which is a low-potential side terminal of the upper arm switch SWH, and a collector, which is a high-potential side terminal of the lower arm switch SWL, via a conductive member 23 such as a busbar. Second ends of the armature windings 11 of each phase are connected at a neutral point. Note that in the present embodiment, the armature windings 11 of each phase are set to have the same number of turns. As a result, the armature windings 11 of each phase are set to have the same inductance, for example.

The collector of the upper arm switch SWH for each phase is connected to the positive-side busbar H1. The emitter of the lower arm switch SWL for each phase is connected to the negative-side busbar L1. The power supply system 100 is connected to the inverter 20 via the positive-side busbar H1 and the negative-side busbar L1.

A first storage battery 31 (corresponding to a first power storage unit) and a second storage battery 32 (corresponding to a second power storage unit) are connected to the power supply system 100. Each storage battery 31, 32 serves as a power source for driving the rotor of the motor 10. Each storage battery 31, 32 is a battery pack configured as a series connection of individual battery cells. A positive terminal of the first storage battery 31 is connected to the positive-side busbar H1, and a negative terminal of the second storage battery 32 is connected to the negative-side busbar L1. The terminal voltage (e.g., rated voltage) of each battery cell constituting the battery pack is set to be the same, for example. The battery cell is a secondary battery, such as a lithium-ion battery.

Each storage battery 31, 32 can be charged by an external charger 40 provided outside the vehicle, as described later. The external charger 40 is, for example, a stationary charger. A positive terminal of the external charger 40 is connected to one end of a positive-side charging path 43, and the other end of the charging path 43 is connected to the positive-side busbar H1. A negative terminal of the external charger 40 is connected to one end of a negative-side charging path 44, and the other end of the charging path 44 is connected to the negative-side busbar L1.

The power supply system 100 is equipped with a positive-side main switch SMRH that switches the energization and de-energization of the positive-side busbar H1 connecting the first storage battery 31 and the inverter 20. The positive-side main switch SMRH is disposed on the positive-side busbar H1. In addition, the power supply system 100 is equipped with a negative-side main switch SMRL that switches the energization and de-energization of the negative-side busbar L1 connecting the second storage battery 32 and the inverter 20. Further, a high-potential-side charging switch DCRH is disposed in the positive-side charging path 43 of the power supply system 100 to switch between energizing and de-energizing the positive-side charging path 43. Furthermore, a low-potential-side charging switch DCRL is disposed in the negative-side charging path 44 of the power supply system 100 to switch between energizing and de-energizing the negative-side charging path 44.

In the present embodiment, each switch SMRH, SMRL, DCRH, and DCRL is a mechanical relay. Each switch SMRH, SMRL, DCRH, and DCRL blocks bidirectional current flow when turned off and allows bidirectional current flow when turned on. Note that the positive-side main switch SMRH, the negative-side main switch SMRL, the high-potential-side charging switch DCRH, and the low-potential-side charging switch DCRL may be semiconductor switching devices, and not limited to mechanical relays.

The power supply system 100 includes a first switch SW1, a second switch SW2, a third switch SW3, and a fourth switch SW4 as switches for switching the connection state of the first storage battery 31 and the second storage battery 32 to either a series connection state, where they are connected in series to the external charger 40, or a via-motor connection state. The via-motor connection state refers to a parallel connection state where the second storage battery 32 is connected in parallel to the first storage battery 31 via the motor 10.

In the present embodiment, the first switch SW1, the second switch SW2, the third switch SW3, and the fourth switch SW4 are mechanical relays. The first switch SW1, the second switch SW2, the third switch SW3, and the fourth switch SW4 block bidirectional current flow when turned off and allow bidirectional current flow when turned on. Note that the first switch SW1, the second switch SW2, the third switch SW3, and the fourth switch SW4 may be semiconductor switching devices, and not limited to mechanical relays.

The first switch SW1 is disposed in a first electrical path 24, which connects a negative terminal of the first storage battery 31 and a positive terminal of the second storage battery 32. When the first switch SW1 is turned on, the negative terminal of the first storage battery 31 and the positive terminal of the second storage battery 32 are electrically connected. On the other hand, when the first switch SW1 is turned off, the negative terminal of the first storage battery 31 and the positive terminal of the second storage battery 32 are electrically disconnected.

The second switch SW2 is disposed in a second electrical path 25, which connects the negative terminal of the first storage battery 31 and the negative-side busbar L1. When the second switch SW2 is turned on, the negative terminal of the first storage battery 31 and the negative-side busbar L1 are electrically connected. On the other hand, when the second switch SW2 is turned off, the negative terminal of the first storage battery 31 and the negative-side busbar L1 are electrically disconnected.

The third switch SW3 and the fourth switch SW4 are disposed in a third electrical path 26, which connects the second storage battery 32 side relative to the first switch SW1 within the first electrical path 24 to the neutral point of the armature windings 11. The third switch SW3 is disposed on the second storage battery 32 side, and the fourth switch SW4 is disposed on the neutral point side. When the third switch SW3 and the fourth switch SW4 are turned on, the neutral point of the armature windings 11 and the positive terminal of the second storage battery 32 are electrically connected. On the other hand, when the third switch SW3 or the fourth switch SW4 is turned off, the neutral point of the armature windings 11 and the positive terminal of the second storage battery 32 are electrically disconnected.

Note that the power supply system 100 is equipped with a neutral point capacitor 22. A high-potential side terminal of the neutral point capacitor 22 is connected to the neutral point (more specifically, the third electrical path 26 between the third switch SW3 and the fourth switch SW4). In addition, a low-potential side terminal of the neutral point capacitor 22 is connected to the negative-side busbar L1 (more specifically, the busbar L1 on the inverter 20 side relative to a first connection point P1 between the second electrical path 25 and the busbar L1).

The power supply system 100 includes a control device 51 (corresponding to a switch control unit). The control device 51 is mainly composed of a microcontroller, and the microcontroller includes a CPU. The functions provided by a microcomputer can be provided by software stored in a substantive memory device and the computer that executes it, by software alone, by hardware alone, or by a combination thereof. For example, if the microcomputer 111 is provided by an electronic circuit that is hardware, it can be provided by a digital or analog circuit that contains many logic circuits. For example, a microcomputer executes a program stored in a non-transitory tangible storage medium as its own storage unit. The program includes, for example, the program for the process shown in Fig. 2, which will be described later. When the program is executed, the method corresponding to the program is performed. The memory unit is, for example, a non-volatile memory. Note that the programs stored in the storage unit can be updated via communication networks such as the internet, for example, through OTA (over the air).

The control device 51 performs switching control of each switch SWH and SWL constituting the inverter 20 to feedback control a control amount of the motor 10 to a command value based on the detected values from various sensors (voltage sensor, current sensor, rotational angle sensor, etc.), which are not shown. The control amount is, for example, torque. In each phase, the upper arm switch SWH and the lower arm switch SWL are alternately turned on. Through this feedback control, the rotational power of the rotor is transmitted to the drive wheels, causing the vehicle to move.

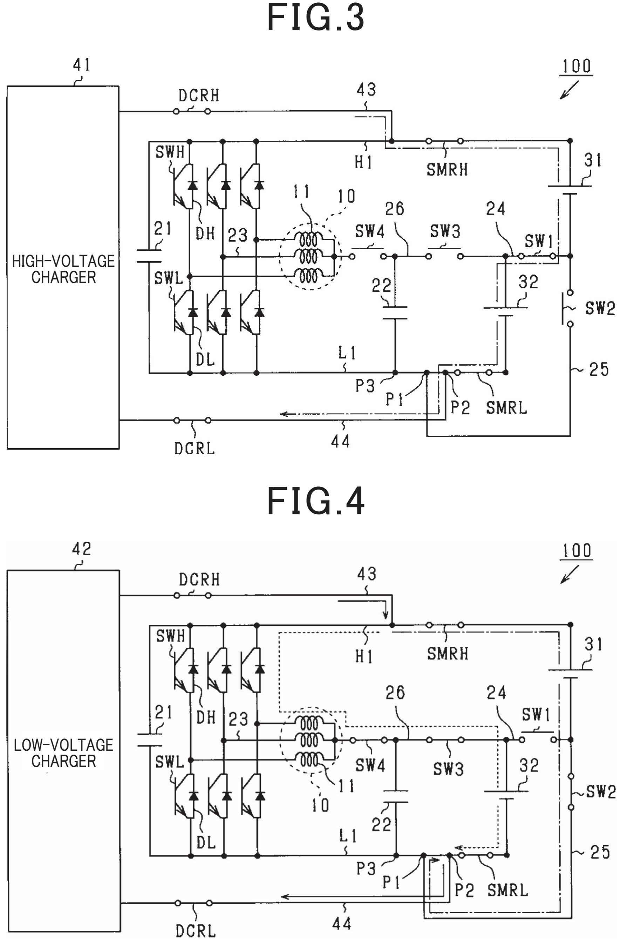

In the present embodiment, the external charger 40 is either a high-voltage charger 41 or a low-voltage charger 42 (refer to Figs. 3 and 4). The charging voltage of the high-voltage charger 41 is approximately equal to the terminal-to-terminal voltage (specifically, the rated voltage) of the series-connected assemblies comprising the first storage battery 31 and the second storage battery 32, and is, for example, 600 V. Note that in the present embodiment, the terminal-to-terminal voltage of the first storage battery 31 is 400 V, and the terminal-to-terminal voltage of the second storage battery 32 is 200 V.

The charging voltage of the low-voltage charger 42 is lower than the rated voltage of the series-connected assemblies of the first storage battery 31 and the second storage battery 32, and is, for example, 400 V. For example, when an external charger 40 is connected to the power system 100 by a user or operator, and the external charger 40 charges the first storage battery 31 and the second storage battery 32, the high-potential-side charging switch DCRH and the low-potential-side charging switch DCRL are switched on by the control device 51.

On the other hand, when charging via the external charger 40 is not performed or when the external charger 40 is not connected, the high-potential-side charging switch DCRH and the low-potential-side charging switch DCRL are switched off by the control device 51.

Next, the charging process by the external charger 40 will be described with reference to Fig. 2. This process is performed by the control device 51.

The control device 51 determines whether the external charger 40 connected to the power supply system 100 is the high-voltage charger 41 (step S10). This process determines whether the connection state of the first storage battery 31 and the second storage battery 32 should be set to a series connection state.

If the control device 51 determines in step S10 that the external charger 40 is the high-voltage charger 41, the control device 51 operates various switches to connect the first storage battery 31 and the second storage battery 32 in the series connection state to the high-voltage charger 41 (step S11).

In more detail, the first switch SW1 is turned on, and the second switch SW2, the third switch SW3, the fourth switch SW4, the upper arm switches SWH for all phases and the lower arm switches SWL for all phases of the inverter 20 are turned off. In addition, the switches SMRH, SMRL, DCRH, and DCRL are turned on.

As a result, as shown in Fig. 3, the first storage battery 31 and the second storage battery 32 are connected in series to the high-voltage charger 41. Note that in Fig. 3, the illustration of the control device 51 and the like is omitted. In addition, current flow is indicated by a dashed line. Therefore, current flows through a closed circuit including the high-voltage charger 41, the positive-side busbar H1, the first storage battery 31, the first switch SW1, the second storage battery 32, and the negative-side busbar L1, thereby charging the first storage battery 31 and the second storage battery 32 while they are connected in series. At this time, since the upper arm switches SWH of the inverter 20, the third switch SW3, and the fourth switch SW4 are turned off, the charging current from the high-voltage charger 41 does not flow to the inverter 20 and the armature windings 11.

Returning to the description of Fig. 2, if the control device 51 determines in step S10 that the external charger 40 is not the high-voltage charger 41, the control device 51 then determines whether the connected external charger 40 is the low-voltage charger 42 (step S12). This process determines whether to set the connection state of the first storage battery 31 and the second storage battery 32 to the via-motor connection state (parallel connection state).

If the external charger 40 is determined in step S12 to be the low-voltage charger 42, the control device 51 operates various switches so that the connection state of the first storage battery 31 and the second storage battery 32 becomes the via-motor connection state (step S13). This allows the system voltage to be lowered to a voltage equivalent to the charging voltage of the low-voltage charger 42.

Specifically, the control device 51 turns off the first switch SW1 and turns on the second switch SW2, the third switch SW3, and the fourth switch SW4. In addition, the lower arm switches SWL of all phases of the inverter 20 are turned off, and the upper arm switch SWH of at least one phase is turned on. Note that when charging the second storage battery 32 by stepping down the charging voltage, the lower arm switches SWL and the upper arm switches SWH are turned on and off in a complementary manner. As a result, as shown in Fig. 4, the first storage battery 31 and the second storage battery 32 become the via-motor connection state to the low-voltage charger 42.

Therefore, current flows through a closed circuit including the low-voltage charger 42, the positive-side busbar H1, the first storage battery 31, the second switch SW2, the second electrical path 25, and the negative-side busbar L1, thereby charging the first storage battery 31. Note that in the following, the closed circuit passing through the first storage battery 31 may be referred to as a first closed circuit. In addition, current flows through a closed circuit (hereinafter referred to as a second closed circuit) including the low-voltage charger 42, the positive-side busbar H1, the upper arm switch SWH, the armature windings 11, the neutral point, the fourth switch SW4, the third switch SW3, the second storage battery 32, and the negative-side busbar L1, thereby charging the second storage battery 32. In addition, the current flowing through the charging paths 43 and 44 is indicated by solid arrows, the current flowing through the first closed circuit is indicated by a dashed arrow, and the current flowing through the second closed circuit is indicated by a broken arrow.

Through the process of step S13, the connection state of the first storage battery 31 and the second storage battery 32 can be set to the via-motor connection state (parallel connection state). This allows the first storage battery 31 to be charged directly by the low-voltage charger 42, and the second storage battery 32 to be charged via the inverter 20 and the armature windings 11. Note that the inverter 20 and the armature windings 11 can be utilized as a power conversion circuit (buck converter) to step down the system voltage. Therefore, even when the rated voltages of the first storage battery 31 and the second storage battery 32 differ, or when the actual terminal-to-terminal voltages of the first storage battery 31 and the second storage battery 32 differ, the first storage battery 31 and the second storage battery 32 can be charged simultaneously without additional power conversion circuits.

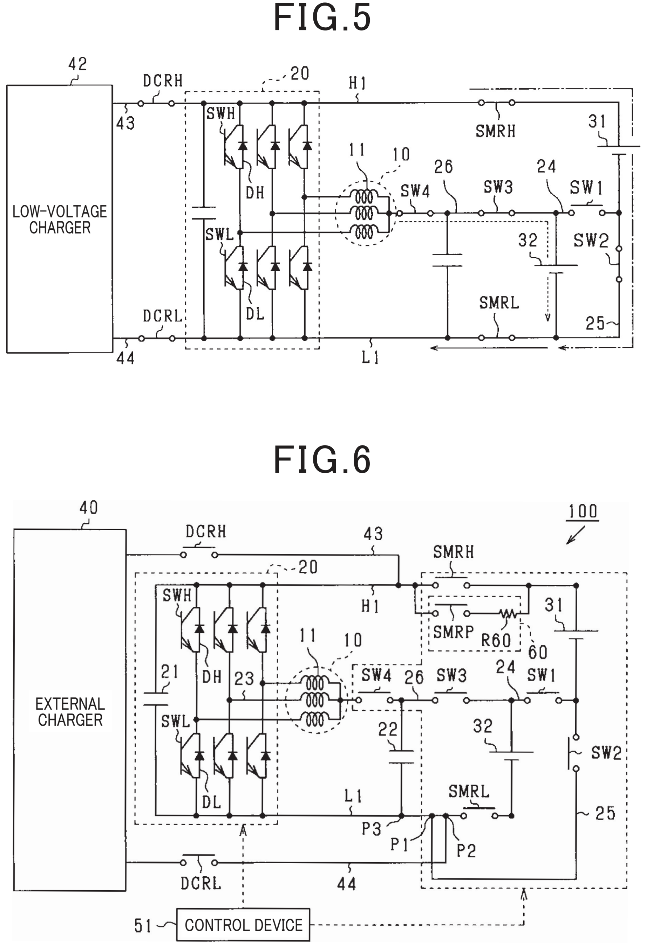

It should be noted that, as shown in the comparative example in Fig. 5, when one end of the second electrical path 25 (an end opposite the first storage battery 31) is connected between the main switch SMRL on the negative terminal side and the second storage battery 32, the following problems arise. That is, when the via-motor-connection state is established in the comparative example of Fig. 5, the current (indicated by a dashed arrow) flowing in the closed circuit including the low-voltage charger 42, the positive-side busbar H1, the first storage battery 31, the second switch SW2, and the negative-side busbar L1, and the current (indicated by a broken arrow) flowing in the closed circuit including the low-voltage charger 42, the positive-side busbar H1, the upper arm switches SWH, the armature windings 11, the neutral point, the fourth switch SW4, the third switch SW3, the second storage battery 32, and the negative-side busbar L1, merge at the negative-side busbar L1.

This causes the current flowing through the negative-side busbar L1 and the negative-side main switch SMRL to increase, potentially causing an abnormality in the negative-side busbar L1 and the negative-side main switch SMRL. For this reason, it is necessary to increase the allowable current of the negative-side busbar L1 and the negative-side main switch SMRL, which increases the size of the device and makes it difficult to reduce its size.

Therefore, in the present embodiment, as shown in Fig. 1, one end of the second electrical path 25 (an end opposite the first storage battery 31) is connected to the negative-side busbar L1 at an end opposite the second storage battery 32 of the two ends of the negative-side main switch SMRL. That is, the first connection point P1 between the second electrical path 25 and the negative-side busbar L1 is positioned closer to the inverter 20 than the negative-side main switch SMRL.

In addition, a second connection point P2 between the negative-side charging path 44 and the negative-side busbar L1 is set between the first connection point P1 and the main switch SMRL. That is, one end of the second electrical path 25 is connected closer to the inverter 20 than the second connection point P2 between the negative-side charging path 44 and the negative-side busbar L1.

Note that a third connection point P3 between the low-potential side terminal of neutral point capacitor 22 and the negative-side busbar L1 is positioned closer to the inverter 20 side (opposite the main switch SMRL) than the first connection point P1. That is, on the negative-side busbar L1, various connection points P1 to P3 are set in the order of the main switch SMRL, the second connection point P2, the first connection point P1, the third connection point P3, and the inverter 20.

As a result, as shown in Fig. 4, in the via-motor connection state (parallel connection state), the first closed circuit and the second closed circuit no longer overlap at points other than the charging paths 43 and 44, and consequently, at the negative-side busbar L1 and the main switch SMRL, the current flowing in the first closed circuit (indicated by a dashed line) and the current flowing in the second closed circuit (indicated by a broken line) no longer merge.

The effects of the power supply system 100 in the first embodiment will be described below.

The second electrical path 25 is connected to the negative-side busbar L1 at one end of the negative-side main switch SMRL opposite to the end to which the second storage battery 32 is connected. In other words, the first connection point P1 between the second electrical path 25 and the negative-side busbar L1 is positioned closer to the inverter 20 than the negative-side main switch SMRL. As a result, when the via-motor-connection state shown in Fig. 4 is established, the current flowing through the first closed circuit and the current flowing through the second closed circuit do not merge in the negative-side main switch SMRL, thereby preventing a large current from flowing in the negative-side main switch SMRL. Therefore, it is not necessary to increase the allowable current of the negative-side main switch SMRL, and the size can be reduced, thereby enabling miniaturization.

The second connection point P2 between the negative-side charging path 44 and the negative-side busbar L1 is connected closer to the negative-side main switch SMRL than the first connection point P1 between the second electrical path 25 and the negative-side busbar L1. This prevents the currents flowing in the first closed circuit and the second closed circuit from merging on the negative-side busbar L1, thereby preventing a large current from flowing on the negative-side busbar L1. Therefore, it is not necessary to increase the allowable current of the negative-side busbar L1, and the size can be reduced, thereby enabling miniaturization.

### <Second Embodiment>

The circuit configuration of the power supply system 100 of the first embodiment described above may be modified. The second embodiment, with some modifications, is described below. In the second embodiment, as shown in Fig. 6, a precharge circuit 60 is connected in parallel with the positive-side main switch SMRH. The precharge circuit 60 is composed of a series-connected assembly between a relay switch SMRP, which is a switching unit, and a resistor R60. The relay switch SMRP is configured to be controllable by the control device 51 and is provided to precharge the smoothing capacitor 21 and neutral point capacitor 22 before turning on the main switch SMRH.

In the second embodiment, the operation sequence of various switches when connecting to the high-voltage charger 41 and placing them in the series connection state (the process in step S11) is described. When establishing the series connection state, the control device 51 first turns on the relay switch SMRP, the first switch SW1, and the negative-side main switch SMRL, while turning off all other switches. In this state, the smoothing capacitor 21 is charged. At this time, the control device 51 charges the smoothing capacitor 21 until it reaches a voltage equivalent to the terminal-to-terminal voltage when the first storage battery 31 and the second storage battery 32 are connected in series (600 V in the present embodiment). Subsequently, the control device 51 turns on the positive-side main switch SMRH and turns off the relay switch SMRP. Then, the control device 51 turns on the high-potential-side charging switch DCRH and the low-potential-side charging switch DCRL, and start charging the first storage battery 31 and the second storage battery 32 using the high-voltage charger 41.

Next, the operation sequence of various switches when connecting to the low-voltage charger 42 and establishing a via-motor connection state (the process in step S13) will be described. When establishing the via-motor connection state, the control device 51 first turns on the relay switch SMRP and the second switch SW2 to charge the smoothing capacitor 21. At this time, the control device 51 charges the smoothing capacitor 21 until it reaches a voltage equivalent to the terminal voltage of the first storage battery 31 (400 V in the present embodiment).

Next, the control device 51 turns on the main switch SMRH and the fourth switch SW4, turns off the main switch SMRL, the third switch SW3, and the relay switch SMRP, and charges the neutral point capacitor 22 by stepping down the voltage via the inverter 20. At this time, the control device 51 charges the neutral point capacitor 22 until it reaches a voltage equivalent to the terminal voltage of the second storage battery 32 (200 V in the present embodiment). Subsequently, the control device 51 turns on the high-potential-side charging switch DCRH and the low-potential-side charging switch DCRL, start charging the first storage battery 31 and the second storage battery 32 using the low-voltage charger 42.

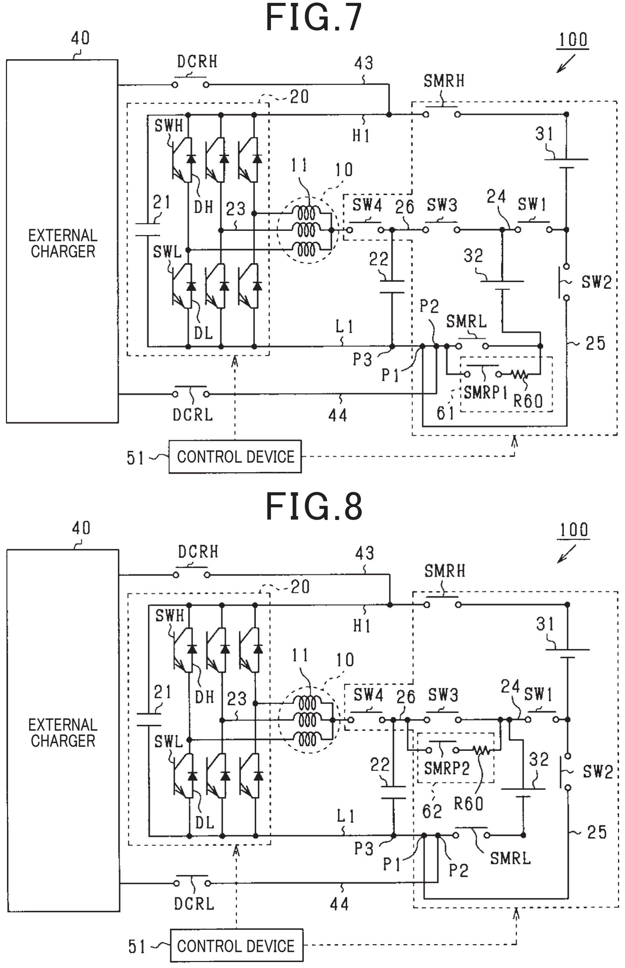

Incidentally, if the purpose is to perform precharging, it is also conceivable to connect a precharge circuit 61, which has a relay switch SMRP1, in parallel with the main switch SMRL on the negative-side, as shown in the modified example of Fig. 7.

To explain in detail, when the circuit configuration shown in the modified example of Fig. 7 is adopted, and when establishing the via-motor connection state, the control device 51 turns on the relay switch SMRP1, the third switch SW3, and the fourth switch SW4 before driving the inverter 20, thereby charging the smoothing capacitor 21 and the neutral point capacitor 22. At this time, the control device 51 charges the smoothing capacitor 21 and the neutral point capacitor 22 until the voltage reaches the voltage corresponding to the terminal voltage of the second storage battery 32 (200 V in the present embodiment).

Next, the control device 51 turns on the main switch SMRL, turns off the relay switch SMRP1, and charges the smoothing capacitor 21 by boosting the voltage via the inverter 20. At this time, the control device 51 charges the smoothing capacitor 21 until the voltage reaches the voltage equivalent to the terminal voltage of the first storage battery 31 (400 V in the present embodiment). Subsequently, the control device 51 turns on the main switch SMRH and the second switch SW2 to establish the via-motor connection state, then the control device 51 turns on the high-potential-side charging switch DCRH and the low-potential-side charging switch DCRL to start charging the first storage battery 31 and the second storage battery 32 using the low-voltage charger 42.

In addition, as shown in the modified example of Fig. 8, it is also possible to connect a precharge circuit 62 having a relay switch SMRP2 in parallel with the third switch SW3.

To explain in detail, when the circuit configuration shown in the modified example of Fig. 8 is adopted, and when establishing the series connection state, the control device 51 turns on the relay switch SMRP2, the main switch SMRL, and the fourth switch SW4 before driving the inverter 20, thereby charging the smoothing capacitor 21 and the neutral point capacitor 22. At this time, the control device 51 charges the smoothing capacitor 21 and neutral point capacitor 22 until the voltage reaches the voltage corresponding to the terminal voltage of the second storage battery 32 (200 V in the present embodiment).

Next, the control device 51 turns on the third switch SW3, turns off the relay switch SMRP2, and charges the smoothing capacitor 21 by boosting the voltage via the inverter 20. At this time, the control device 51 charges the smoothing capacitor 21 until the voltage reaches the voltage equivalent to the terminal voltage between the first storage battery 31 and the second storage battery 32 connected in series (600 V in the present embodiment). Subsequently, the control device 51 turns off the third switch SW3, turns on the main switch SMRH and the first switch SW1 to establish the series connection state, and turns on the high-potential-side charging switch DCRH and the low-potential-side charging switch DCRL to start charging the first storage battery 31 and the second storage battery 32 using the high-voltage charger 41.

Note that when the circuit configuration shown in the modified example of Fig. 8 is adopted, and when establishing the series connection state, the neutral point capacitor 22 is once charged and then discharged, which may result in wasted power.

In addition, when the circuit configuration shown in the modified example of Fig. 8 is adopted, and when establishing the via-motor connection state, the control device 51 first turns on the relay switch SMRP2, the main switch SMRL, and the fourth switch SW4 before driving the inverter 20, thereby charging the smoothing capacitor 21 and the neutral point capacitor 22. At this time, the control device 51 charges the smoothing capacitor 21 and the neutral point capacitor 22 until the voltage reaches the voltage corresponding to the terminal voltage of the second storage battery 32 (200 V in the present embodiment).

Next, the control device 51 turns on the third switch SW3, turns off the relay switch SMRP2, and charges the smoothing capacitor 21 by boosting the voltage via the inverter 20. At this time, the control device 51 charges the smoothing capacitor 21 until the voltage reaches the voltage equivalent to the terminal voltage of the first storage battery 31 (400 V in the present embodiment). Subsequently, the control device 51 turns on the main switch SMRH and the second switch SW2 to establish the via-motor connection state, and turns on the high-potential side charging switch DCRH and the low-potential side charging switch DCRL to start charging the first storage battery 31 and the second storage battery 32 using the low-voltage charger 42.

### <Third Embodiment>

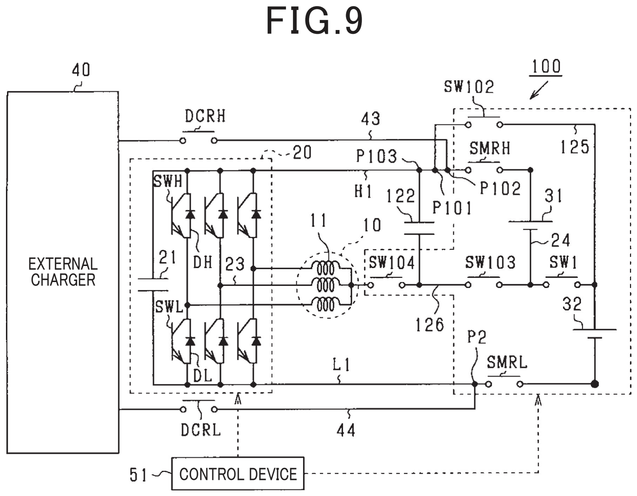

The circuit configuration of the power supply system 100 of the first embodiment may also be configured with the positive and negative terminals reversed, as shown in Fig. 9. A power supply system 100 according to a third embodiment shown in Fig. 9 will now be described.

To explain in detail, a second switch SW102 is disposed in a second electrical path 125 connecting the positive terminal of the second storage battery 32 to the positive-side busbar H1. When the second switch SW102 is turned on, the positive terminal of the second storage battery 32 is electrically connected to the positive-side busbar H1. On the other hand, when the second switch SW102 is turned off, the positive terminal of the second storage battery 32 is electrically disconnected from the positive-side busbar L1.

A third switch SW103 and a fourth switch SW104 are disposed in a third electrical path 126, which connects the side of the first storage battery 31 within the first electrical path 24, which is closer than the first switch SW1, to the neutral point of the armature windings 11. When the third switch SW103 and the fourth switch SW104 are turned on, the neutral point of the armature windings 11 is electrically connected to the negative terminal of the first storage battery 31. On the other hand, when the third switch SW103 or the fourth switch SW104 is turned off, the neutral point of the armature windings 11 and the negative terminal of the first storage battery 31 are electrically disconnected.

Note that the power supply system 100 is equipped with a neutral point capacitor 122. A high-potential side terminal of the neutral point capacitor 122 is connected to the positive-side busbar H1 (more specifically, is connected to the busbar H1 on the inverter 20 side relative to a first connection point P101 between the second electrical path 125 and the busbar H1). In addition, a low-potential side terminal of the neutral point capacitor 122 is connected to the neutral point (more specifically, is connected to the third electrical path 126 between the fourth switch S104 and the third switch SW103).

Then, in the third embodiment, as shown in Fig. 9, one end of the second electrical path 125 (an end opposite the second storage battery 32) is connected to an opposite end of the positive-side main switch SMRH from the first storage battery 31 on the positive-side busbar H1. That is, the first connection point P101 between the second electrical path 125 and the positive-side busbar H1 is positioned closer to the inverter 20 than the positive-side main switch SMRH.

In addition, a second connection point P102 between the positive-side charging path 43 and the positive-side busbar H1 is set between the first connection point P101 and the main switch SMRH. That is, one end of the second electrical path 125 is connected closer to the inverter 20 than the second connection point P102 between the positive-side charging path 43 and the positive-side busbar H1.

Note that a third connection point P103 between the high-potential side terminal of the neutral point capacitor 122 and the positive-side busbar H1 is positioned closer to the inverter 20 side (opposite the main switch SMRH) than the first connection point P101. That is, on the positive-side busbar H1, the various connection points P101 to P103 are set in the order of the main switch SMRH, the second connection point P102, the first connection point P101, the third connection point P103, and the inverter 20.

As a result, in the via-motor connection state (parallel connection state), the first closed circuit and the second closed circuit no longer overlap at points other than the charging paths 43 and 44, and consequently, at the positive-side busbar H1 and the main switch SMRH, the current flowing in the first closed circuit and the current flowing in the second closed circuit no longer merge. Therefore, it is possible to suppress the large currents from flowing in the positive-side main switch SMRH in the positive-side busbar H1. Therefore, it is not necessary to increase the allowable current of the positive-side main switch SMRH and the positive-side bus H1, and the size can be reduced, thereby enabling miniaturization.

It should be noted that in the third embodiment, when adopting the precharge circuit 60 of the second embodiment, it may be connected in parallel with the negative-side main switch SMRL.

### (Modification)

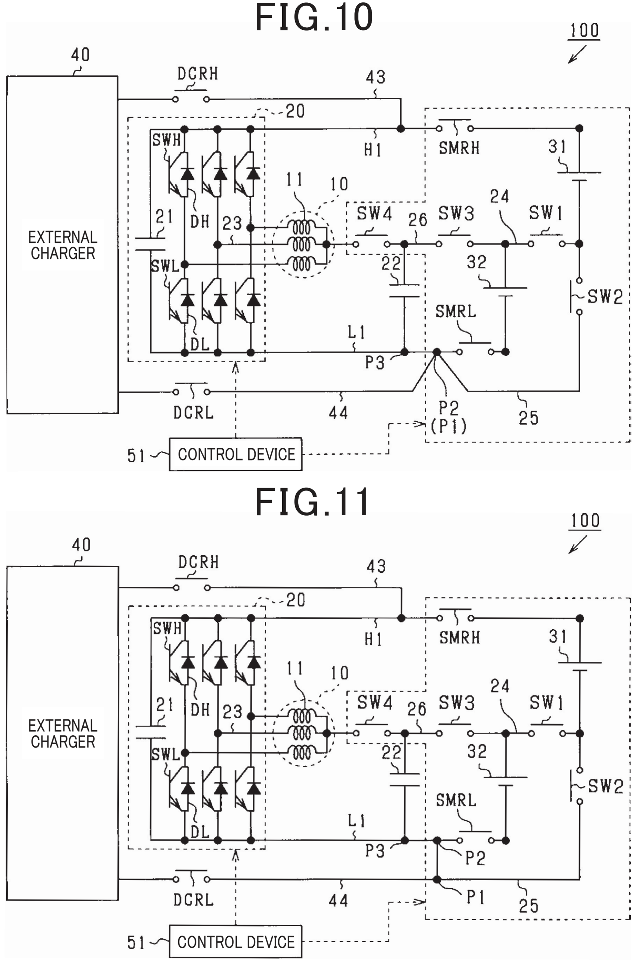

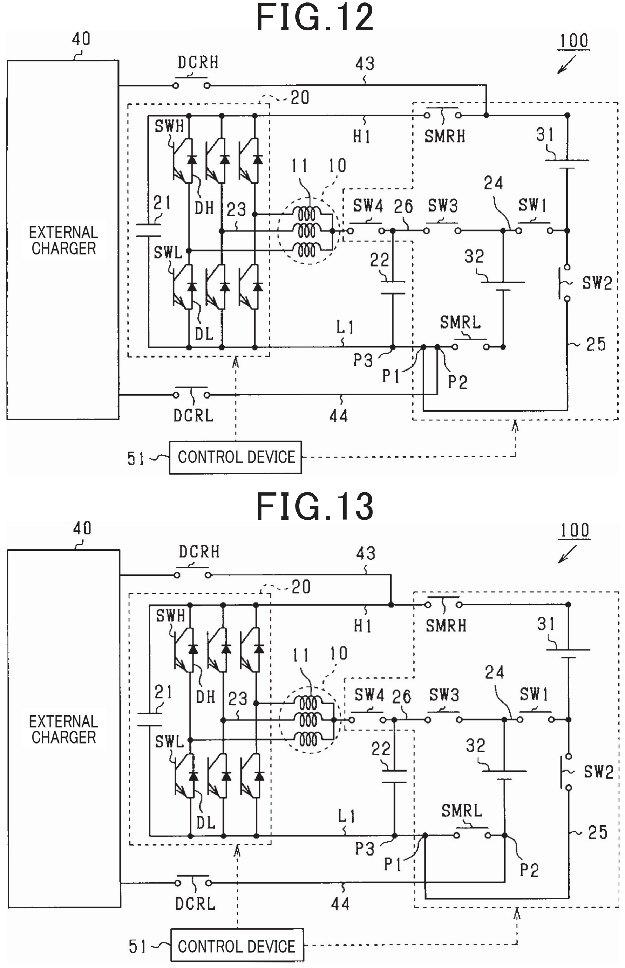

- As shown in Fig. 10, a part of the configuration of the power supply system 100 of the above embodiment may be configured such that one end of the second electrical path 25 (an end opposite the first storage battery 31) is connected to the second connection point P2 between the negative-side charging path 44 and the negative-side busbar L1. That is, as shown in Fig. 10, the first connection point P1 and the second connection point P2 may be aligned.
- As shown in Fig. 11, a part of the configuration of the power supply system 100 of the above embodiment may be configured such that one end of the second electrical path 25 (an end opposite the first storage battery 31) is connected to the negative-side charging path 44. That is, as shown in Fig. 11, the first connection point P1 may be set in the negative-side charging path 44.
- The configuration of the power supply system 100 of the above embodiment may be modified as shown in Figs. 12 to 15. That is, as shown in Fig. 12, one end of the positive-side charging path 43 (an end opposite the external charger 40) may be connected between the positive-side main switch SMRH and the first storage battery 31.

In addition, as shown in Fig. 13, one end of the negative-side charging path 44 (an end opposite the external charger 40) may be connected between the negative-side main switch SMRL and the second storage battery 32.

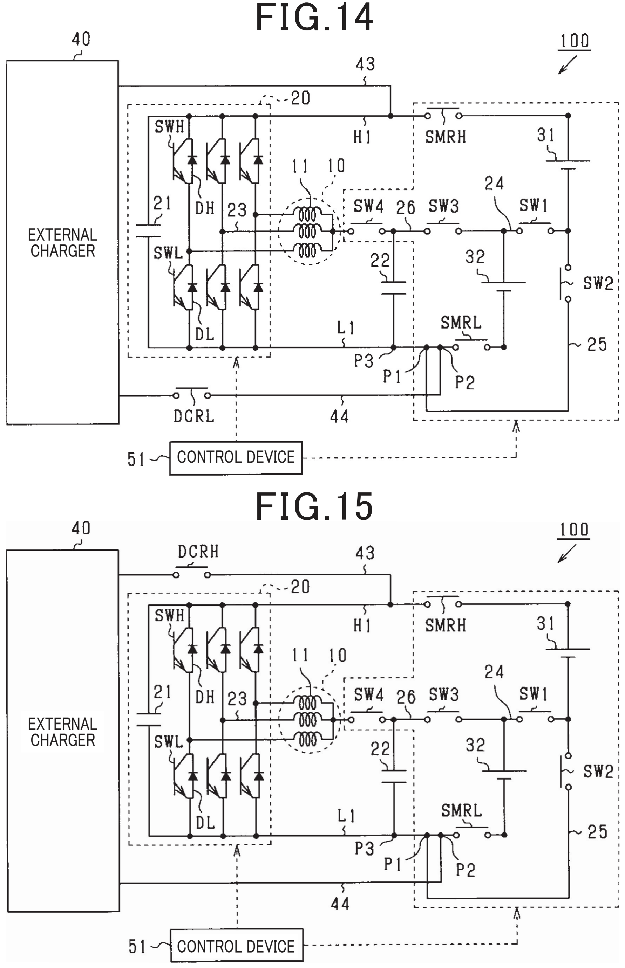

Further, as shown in Fig. 14 or Fig. 15, either the high-potential-side charging switch DCRH or the low-potential-side charging switch DCRL may be omitted.
- In each of the above modifications, the circuit configuration may also be arranged with the positive and negative electrodes reversed, as in the third embodiment.
- In the above embodiments and modifications, the fourth switch SW4 may be omitted.

The following describes the characteristic configurations extracted from each of the above embodiments.

### [Configuration 1]

A power supply system (100) connected to a plurality of power storage units (31, 32), an inverter (20) for converting direct current from the plurality of power storage units, and a motor (10) driven by power converted by the inverter, the power supply system including:
the plurality of power storage units includes a first power storage unit (31) and a second power storage unit (32) connected in series with the first power storage unit,
a positive-side main switch (SMRH) that switches the energization and de-energization of a positive-side busbar (H1) connecting between a positive terminal of the first power storage unit and the inverter,
a negative-side main switch (SMRL) that switches the energization and de-energization of a negative-side busbar (L1) connecting between a negative terminal of the second power storage unit and the inverter,
a first switch (SW1) that switches the energization and de-energization of a first electrical path (24) connecting between a negative terminal of the first power storage unit and a positive terminal of the second power storage unit,
a second switch (SW2) that switches the energization and de-energization of a second electrical path (25) connecting between the negative terminal of the first power storage unit and a negative-side busbar, and
a third switch (SW3) that switches the energization and de-energization of a third electrical path (26) connecting between a neutral point of a multi-phase armature winding (11) of the motor and the positive terminal of the second power storage unit, wherein
the second electrical path is connected to the negative-busbar at one end of the negative-side main switch opposite to an end to which the second power storage unit is connected.

### [Configuration 2]

The power supply system according to configuration 1, wherein
a precharge circuit (60) in which a switching unit (SMRP) and a resistor (R60) are connected in series is connected in parallel to the positive-side main switch.

### [Configuration 3]

A power supply system (100) connected to a plurality of power storage units (31, 32), an inverter (20) for converting direct current from the plurality of power storage units, and a motor (10) driven by power converted by the inverter, the power supply system including:
the plurality of power storage units includes a first power storage unit (31) and a second power storage unit (32) connected in series with the first power storage unit,
a positive-side main switch (SMRH) that switches the energization and de-energization of a positive-side busbar (H1) connecting between a positive terminal of the first power storage unit and the inverter,
a negative-side main switch (SMRL) that switches the energization and de-energization of a negative-side busbar (L1) connecting between a negative terminal of the second power storage unit and the inverter,
a first switch (SW1) that switches the energization and de-energization of a first electrical path (24) connecting between a negative terminal of the first power storage unit and a positive terminal of the second power storage unit,
a second switch (SW102) that switches the energization and de-energization of a second electrical path (125) connecting between a positive terminal of the second power storage unit and the positive-side busbar,
a third switch (SW103) that switches the energization and de-energization of a third electrical path (126) connecting between a neutral point of a multi-phase armature winding (11) of the motor and the negative terminal of the first power storage unit, wherein
the second electrical path is connected to the positive-busbar at one end of the positive-side main switch opposite to an end to which the first power storage unit is connected.

### [Configuration 4]

The power supply system according to configuration 3, wherein
a precharge circuit (60) in which a switching unit (SMRP) and a resistor (R60) are connected in series is connected in parallel to the negative-side main switch.

### [Configuration 5]

The power supply system according to any one of configurations 1 to 4, wherein
the power supply system is configured to be connectable to an external charger (40),
a positive terminal of the external charger is connected to the positive-side busbar via the positive charging path (43), and a negative terminal of the external charger is connected to the negative-side busbar via the negative charging path (44), and
a connection point (P2, P102) between the charging path and the busbar is connected closer to the main switch than a connection point (P1, P101) between the second electrical path and the busbar.

### [Configuration 6]

The power supply system according to any one of configurations 1 to 4, wherein
the power supply system is configured to be connectable to an external charger (40),
a positive terminal of the external charger is connected to the positive-side busbar via the positive charging path (43), and a negative terminal of the external charger is connected to the negative-side busbar via the negative charging path (44), and
the second electrical path is connected to the busbar by being connected to a connection point (P2, P102) between the charging path and the busbar.

The present disclosure has been described in accordance with the embodiments, but it should be understood that the present disclosure is not limited to these embodiments or structures. The present disclosure encompasses various modifications and modifications within the scope of equivalents. In addition, various combinations and forms, as well as other combinations and forms that include only one element, more than one element, or fewer than one element of these, also fall within the scope and spirit of the present disclosure.

## Claims

1. A power supply system (100) connected to a plurality of power storage units (31, 32), an inverter (20) for converting direct current from the plurality of power storage units, and a motor (10) driven by power converted by the inverter, the power supply system comprising:
the plurality of power storage units includes a first power storage unit (31) and a second power storage unit (32) connected in series with the first power storage unit,
a positive-side main switch (SMRH) that switches the energization and de-energization of a positive-side busbar (H1) connecting between a positive terminal of the first power storage unit and the inverter,
a negative-side main switch (SMRL) that switches the energization and de-energization of a negative-side busbar (L1) connecting between a negative terminal of the second power storage unit and the inverter,
a first switch (SW1) that switches the energization and de-energization of a first electrical path (24) connecting between a negative terminal of the first power storage unit and a positive terminal of the second power storage unit,
a second switch (SW2) that switches the energization and de-energization of a second electrical path (25) connecting between the negative terminal of the first power storage unit and a negative-side busbar, and
a third switch (SW3) that switches the energization and de-energization of a third electrical path (26) connecting between a neutral point of a multi-phase armature winding (11) of the motor and the positive terminal of the second power storage unit, wherein
the second electrical path is connected to the negative-busbar at one end of the negative-side main switch opposite to an end to which the second power storage unit is connected.

2. The power supply system according to claim 1, wherein
a precharge circuit (60) in which a switching unit (SMRP) and a resistor (R60) are connected in series is connected in parallel to the positive-side main switch.

3. A power supply system (100) connected to a plurality of power storage units (31, 32), an inverter (20) for converting direct current from the plurality of power storage units, and a motor (10) driven by power converted by the inverter, the power supply system comprising:
the plurality of power storage units includes a first power storage unit (31) and a second power storage unit (32) connected in series with the first power storage unit,
a positive-side main switch (SMRH) that switches the energization and de-energization of a positive-side busbar (H1) connecting between a positive terminal of the first power storage unit and the inverter,
a negative-side main switch (SMRL) that switches the energization and de-energization of a negative-side busbar (L1) connecting between a negative terminal of the second power storage unit and the inverter,
a first switch (SW1) that switches the energization and de-energization of a first electrical path (24) connecting between a negative terminal of the first power storage unit and a positive terminal of the second power storage unit,
a second switch (SW102) that switches the energization and de-energization of a second electrical path (125) connecting between a positive terminal of the second power storage unit and the positive-side busbar,
a third switch (SW103) that switches the energization and de-energization of a third electrical path (126) connecting between a neutral point of a multi-phase armature winding (11) of the motor and the negative terminal of the first power storage unit, wherein
the second electrical path is connected to the positive-busbar at one end of the positive-side main switch opposite to an end to which the first power storage unit is connected.

4. The power supply system according to claim 3, wherein
a precharge circuit (60) in which a switching unit (SMRP) and a resistor (R60) are connected in series is connected in parallel to the negative-side main switch.

5. The power supply system according to any one of claims 1 to 4, wherein
the power supply system is configured to be connectable to an external charger (40),
a positive terminal of the external charger is connected to the positive-side busbar via the positive charging path (43), and a negative terminal of the external charger is connected to the negative-side busbar via the negative charging path (44), and
a connection point (P2, P102) between the charging path and the busbar is connected closer to the main switch than a connection point (P1, P101) between the second electrical path and the busbar.

6. The power supply system according to any one of claims 1 to 4, wherein
the power supply system is configured to be connectable to an external charger (40),
a positive terminal of the external charger is connected to the positive-side busbar via the positive charging path (43), and a negative terminal of the external charger is connected to the negative-side busbar via the negative charging path (44), and
the second electrical path is connected to the busbar by being connected to a connection point (P2, P102) between the charging path and the busbar.
